# EUROPEAN PATENT APPLICATION

(11) **EP 3 640 515 A1**
(43) Date of publication of application: **22.04.2020**
(21) Application number: 18818939.3
(22) Date of filing: 11.06.2018
(51) Int. Cl.: F16L 33/22, F16L 19/02

(54) **PIPE JOINT**

(30) Priority: 13.06.2017 JP 2017115786
(71) Applicant: Toyox Co., Ltd., Kurobe-shi Toyama 938-8585 (JP)
(72) Inventor: MIYAZAKI, Osamu, Kurobe-shi, Toyama 938-8585 (JP); FUJIMORI, Hiroshi, Kurobe-shi, Toyama 938-8585 (JP)
(74) Representative: Perani & Partners S.p.A.
(86) International application number: PCT/JP2018/022227
(87) International publication number: WO 2018/230503

(57) **Abstract**

Even a person having no experience or knowledge as an operator, a supervisor, or the like easily confirms the tightening state of a hose by visual observation, manipulation, or the like immediately after the connection operation of the hose or after the lapse of time since the connection completion of the hose. A hose joint includes: a nipple having an insertion part that is inserted into a hose and faces an inner surface of the hose in a radial direction; a tightening member that is provided to be movable in an axial direction with respect to an outer surface of the hose into which the insertion part of the nipple is inserted; and a displaying member that is provided to be sandwiched in the axial direction between the nipple and the tightening member, wherein the tightening member has a pressing part that is formed to press the outer surface of the hose against the insertion part in the radial direction as the tightening member moves to approach the nipple, and the displaying member has a deformation part that deforms in the axial direction or the radial direction as the tightening member moves to approach the nipple.

## Description

### [Technical Field]

The present invention relates to a hose joint used to connect a hose such as a pipe made of a hard material and a hose pipe or a tube made of a soft material through piping.

### [Background Art]

Conventionally, as such a type of a hose joint, a conduit or a hose pipe connection device has been known in which two separate display rings are provided as indicators for enabling the reproduction or recognition of an assembling state between the mutually-facing end surfaces of a connection body having a hole for causing a medium flowing through a conduit or a hose pipe to pass therethrough and a union nut screwed into the connection body (see, for example, PTL 1).

The two separate display rings are attached to the connection body and the union body, respectively, and provided with stopper surfaces. Before the completion of assembling, both the stopper surfaces create a window for maintaining an interval extending in a circumferential direction, and the window or the stopper surfaces can be recognized as a marker for revealing an assembling state. From this state, the union nut is rotated to rotate the stopper surface of the display ring attached to the union nut and bring the same into contact with the stopper surface of the display ring of the connection body, whereby the window is closed to reveal the state of the completion of the assembling.

### [Citation List]

### [Patent Literature]

[PTL 1] Japanese Patent No. 5879368

### [Summary of Invention]

### [Technical Problem]

However, since such a conventional hose joint requires the provision of two display rings at a connection body and a union nut, the structures of the connection body and the union nut are complicated, which results in a cost increase.

Further, in an existing conduit or a hose pipe connection device, a connection body or a union nut is required to be replaced with one provided with a display ring, which results in poor usability.

Under such circumstances, there has been a demand for a hose joint having a structure that enables an operator, a supervisor, or the like to confirm the tightening state of a hose by visual observation or the like with a simple structure and at a low cost during or after the connection operation of the hose only by adding components without replacing existing components.

### [Solution to Problem]

In order to solve the above problems, a hose joint according to the present invention includes: a nipple having an insertion part that is inserted into a hose and faces an inner surface of the hose in a radial direction; a tightening member that is provided to be movable in an axial direction with respect to an outer surface of the hose into which the insertion part of the nipple is inserted; and a displaying member that is provided to be sandwiched in the axial direction between the nipple and the tightening member, wherein the tightening member has a pressing part that is formed to press the outer surface of the hose against the insertion part in the radial direction as the tightening member moves to approach the nipple, and the displaying member has a deformation part that deforms in the axial direction or the radial direction as the tightening member moves to approach the nipple.

### [Brief Description of Drawings]

Fig. 1 is an explanatory view showing a hose joint according to a first embodiment of the present invention, the (a) in Fig. 1 being a partially-notched front view before the tightening of a hose, the (b) in Fig. 1 being a partially-notched front view after the tightening of the hose.
Fig. 2 is an exploded perspective view.
Fig. 3 is an explanatory view showing the process of tightening the hose in a partially enlarged manner, the (a) in Fig. 3 being a vertical-section front view showing a state before the tightening of the hose, the (b) in Fig. 3 being a vertical-section front view showing a state during the tightening of the hose, the (c) in Fig. 3 being a vertical-section front view showing a state after the tightening of the hose.
Fig. 4 is an explanatory view showing a hose joint according to a second embodiment of the present invention, the (a) in Fig. 4 being a partially-notched front view before the tightening of a hose, the (b) in Fig. 4 being a partially-notched front view after the tightening of the hose.
Fig. 5 is an exploded perspective view.
Fig. 6 is an explanatory views showing the process of tightening the hose in a partially enlarged manner, the (a) in Fig. 6 being a vertical-section front view showing a state before the tightening of the hose, the (b) in Fig. 6 being a vertical-section front view showing a state during the tightening of the hose, the (c) in Fig. 6 being a vertical-section front view showing a state after the tightening of the hose.

### [Description of Embodiments]

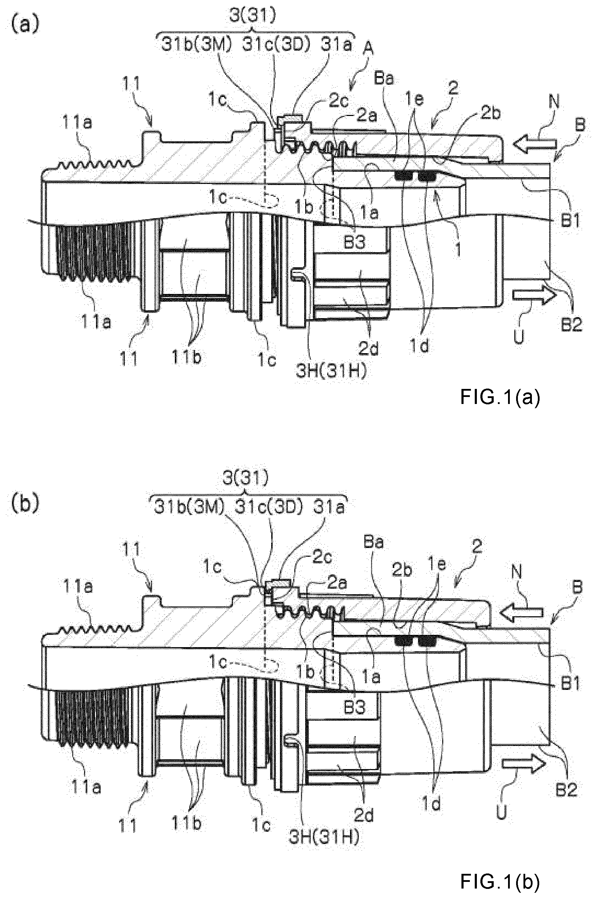

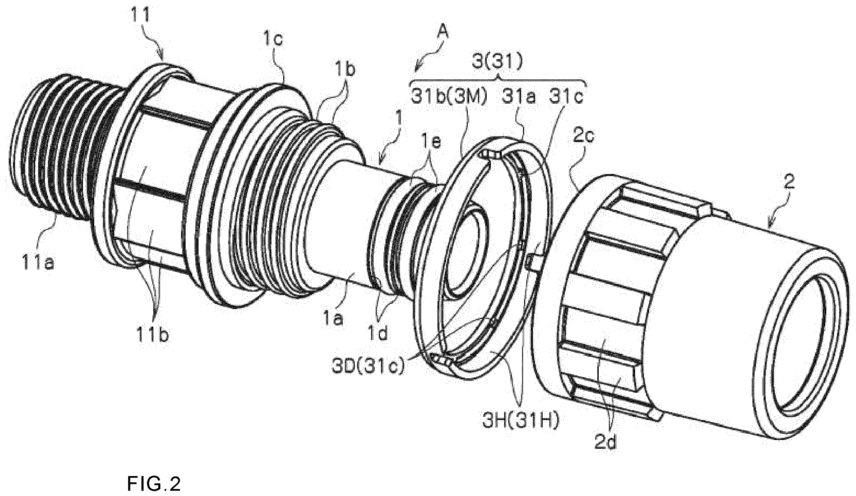

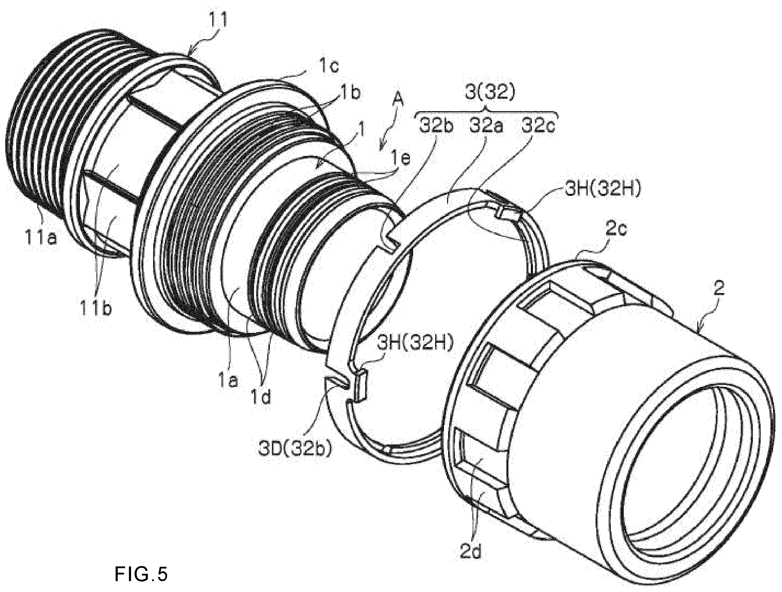

Hereinafter, embodiments of the present invention will be described in detail with reference to the drawings. As shown in Figs. 1 to 6, a hose joint A according to the embodiments of the present invention has a displaying member 3 provided at any one of a nipple 1 and a tightening member 2 to be arranged between the nipple 1 and the tightening member 2, and causes the tightening member 2 coated on the outside of the nipple 1 to move in an axial direction with respect the nipple 1 with a hose B inserted into the nipple 1.

Thus, the hose B is sandwiched between the nipple 1 and the tightening member 2 in a radial direction and connected thereto unremovably. The tightening state of the tightening member 2 with respect to the nipple 1 can be confirmed by an operator or the like depending on the situation of the displaying member 3.

Specifically, the hose joint A according to the embodiments of the present invention includes as main constituents: the nipple 1 having an insertion part 1a that is inserted into the hose B and faces an inner surface B1 of the hose B in the radial direction; the tightening member 2 that is provided to be movable in the axial direction with respect to an outer surface B2 of the hose B into which an insertion part 1a of the nipple 1 is inserted; and the displaying member 3 that is provided (attached) between the nipple 1 and the tightening member 2.

Note that as the axial direction in which the tightening member 2 moves, a direction in which the hose B is inserted into the nipple 1 and in which the tightening member 2 moves to approach the nipple 1 will be called a "hose insertion direction N," and a direction opposite to the hose insertion direction N in which the hose B is removed and in which the tightening member 2 moves to separate from the nipple 1 will be called a "hose removal direction U."

The hose B is a pipe made of, for example, a hard material such as a hard resin and metal, or is, for example, a hose pipe, a tube, or the like molded by a soft synthetic resin such as vinyl chloride or a soft material having flexibility such as silicone rubber and other rubber. In addition, the hose B is cut off into a prescribed length by a cutting tool (not shown) such as a pipe cutter and scissors.

As the hose B, it is preferable to use one that has the flat inner surface B1 and the outer surface B2, and that has a cut surface B3 cut off approximately perpendicularly or at an angle close to a right angle.

With respect to the insertion part 1a of the nipple 1, a connection end part Ba of the hose B that has a prescribed length from the cut surface B3 is inserted.

In an example shown as a specific example of the hose B, a pipe having a single-layer structure is used and fitted along the insertion part 1a of the nipple 1 with the connection end part Ba deforming to further expand its diameter than other sections.

Further, although not shown in the figures as other examples, it is possible to make changes such as using a pipe having a plural-layer structure in which a metal layer such as aluminum, a hard resin layer, and the like are integrally laminated together, using a hose pipe, a tube, or the like having a single-layer structure or a plural-layer structure, and fitting the hose B into the insertion part 1a of the nipple 1 without making the connection end part Ba of the hose B deform to further expand the diameter than other sections.

The nipple 1 is made of, for example, a rigid material such as a hard synthetic resin and metal like brass, and the insertion part 1a is formed into a substantially cylindrical shape having an outer diameter approximately the same as or slightly smaller than the inner diameter of the connection end part Ba of the hose B. In addition, as the nipple 1, it is also possible to use a thin and substantially cylindrical one having an outer diameter substantially the same as or slightly smaller than the inner diameter of the hose B by performing press working or other molding processing on a plate member made of, for example, a deformable rigid material such as stainless steel.

The nipple 1 has the cylindrical insertion part 1a that is inserted into the connection end part Ba of the hose B, a guide part 1b that is provided to face the inner surface of the tightening member 2 that will be described later in the radial direction, and a protruding part 1c that is provided to face the tip surface of the tightening member 2 that will be described later in the axial direction.

The guide part 1b is a section that guides the tightening member 2 that will be described later with respect to the nipple 1 to be reciprocable in the axial direction.

In the case of an example shown in Figs. 1 to 6 as a specific example of the guide part 1b, a male screw that threadedly engages the inner surface of the tightening member 2 that will be described later is provided, and the male screw is formed between the insertion part 1a and the protruding part 1c of the nipple 1.

The protruding part 1c is formed to protrude to face the tip surface of the tightening member 2 that will be described later or the displaying member 3 that will be described later in the axial direction.

In the case of an example shown in Figs. 1 to 6 as a specific example of the protruding part 1c, the protruding part 1c is formed to protrude in a flange shape continuous in a ring shape in a circumferential direction crossing the axial direction (the hose insertion direction N or the hose removal direction U).

Further, although not shown in the figures as other examples, it is also possible to make changes such as providing linear grooves extending in the axial direction, a slider mechanism, or the like as the guide part 1b instead of the male screw and forming the shape of the protruding part 1c into a shape discontinuous in the circumferential direction instead of the ring shape.

In addition, the nipple 1 preferably has, at the insertion part 1a, a ring-shaped concave part 1d that faces the insertion space of the hose B in the radial direction and extends in the circumferential direction and an elastically-deformable ring-shaped seal member 1e such as an O-ring fitted and attached into the ring-shaped concave part 1d to be immovably retained in the axial direction.

The seal member 1e makes its outer peripheral end slightly protrude from the insertion part 1a of the nipple 1 and press against the inner surface B1 of the connection end part Ba of the inserted hose B. In the example shown in the figures, a plurality of sets (two sets) of the ring-shaped concave parts 1d and the seal members 1e are arranged with a prescribed interval placed therebetween in the axial direction at the insertion part 1a of the nipple 1.

Further, although not shown in the figures as other examples, it is also possible to make changes such as arranging one set or three or more sets of the ring-shaped concave parts 1d and the seal members 1e and forming a bamboo shoot shape in which a plurality of ring-shaped protrusions and ring-shaped grooves are alternately formed in the axial direction.

Further, the nipple 1 is preferably provided with a joint body 11 to which other equipment (not shown), other hoses (not shown), or the like are connected and connects other equipment, other hoses, or the like connected to the joint body 11 to the hose B.

In the example shown in the figures, the cylindrical joint body 11 is integrally formed on a deeper side in the hose insertion direction N than the protruding part 1c of the nipple 1. In the joint body 11, each of a connection section 11a to be connected to the hose connection ports (not shown) of other equipment, other hoses, or the like and a tool engagement section 11b where a tool (not shown) engages in the circumferential direction is integrally formed. When an inner screw is engraved on the inner peripheral surfaces of the hose connection ports of other equipment, other hoses, or the like connected to the hose joint A, an outer screw corresponding to the inner screw is engraved on the connection section 11a. Further, when an outer screw is engraved on the outer peripheral surfaces of the hose connection ports, an inner screw corresponding to the outer screw is engraved on the connection section 11a. In the example shown in the figures, an outer screw is engraved as the connection section 11a. As the shape of the tool engagement section 11b, concave parts and the convex parts are alternately continuously formed in the circumferential direction.

Further, although not shown in the figures as other examples, it is also possible to make changes such as separately forming the nipple 1 and the joint body 11 and detachably attach the same and changing the shape of the tool engagement section 11b into a hexagonal nut shape or the like in which a spanner, a wrench, or the like fits.

The tightening member 2 is formed into a substantially cylindrical shape having an inner diameter larger than the connection end part Ba of the hose B inserted into the insertion part 1a of the nipple 1 at its part in the axial direction by, for example, a rigid material such as a rust-resistant metal material like a hard synthetic resin and stainless steel.

The tightening member 2 has, at its inner surface, movement means 2a provided to face the guide part 1b of the nipple 1 in the radial direction, a pressing part 2b provided to face the nipple 1 and the connection end part Ba of the hose B into which the insertion part 1a is inserted in the radial direction, and a tip part 2c that faces the protruding part 1c of the nipple 1 and the displaying member 3 that will be described later in the axial direction.

In addition, the tightening member 2 preferably has, at its exposed section (outer surface), a tool engagement part 2d where a tool (not shown) engages in the circumferential direction.

The movement means 2a is a section that reciprocably moves in the axial direction in cooperation with the guide part 1b of the nipple 1. In addition, the movement means 2a preferably rotatably cooperates with the guide part 1b of the nipple 1 in the circumferential direction and reciprocates with the rotational operation of the tightening member 2.

Specifically, the movement means 2a is configured to relatively move in the hose insertion direction N along the guide part 1b of the nipple 1 to cause the tip part 2c to approach toward the protruding part 1c of the nipple 1. The movement means 2a is configured to relatively move in the hose removal direction U opposite to the hose insertion direction N to cause the tip part 2c to separate from the protruding part 1c of the nipple 1.

In the case of the example shown in Figs. 1 to 6 as a specific example of the movement means 2a, a female screw that threadedly engages the spiral grooves of the guide part 1b is provided, and the screw is partially formed on one end side of the inner surface of the tightening member 2.

The pressing part 2b is a section that presses (tightens) the outer surface B2 of the connection end part Ba of the hose B toward the insertion part 1a in the radial direction and brings the inner surface B1 of the connection end part Ba of the hose B into intimate contact with the insertion part 1a of the nipple 1 as the movement means 2a moves to approach the guide part 1b of the nipple 1 in the hose insertion direction N.

In the case of the example shown in Figs. 1 to 6 as a specific example of the pressing part 2b, a tapered surface inclined to make its diameter gradually smaller toward the hose removal direction U is provided, and the tapered surface is partially formed on the other end side of the inner surface of the tightening member 2 and brought into direct contact with the outer surface B2 of the connection end part Ba of the hose B.

In the case of the example shown in Figs. 1 to 6 as a specific example of the tool engagement part 2d, substantially rectangular concave sections and convex sections are alternately continuously formed along the one end side of the outer surface of the tightening member 2.

Further, although not shown in the figures as other examples, it is also possible to make changes such as providing linear protrusions extending in the axial direction, a slider mechanism, or the like as the movement means 2a instead of the female screw and changing the shape and the arrangement of the pressing part 2b to those other than the example shown in the figures. In addition, it is also possible to make changes such as interposing an elastically-deformable sleeve inside the pressing part 2b to make the pressing part 2b indirectly contact the outer surface B2 of the connection end part Ba of the hose B and changing the shape and the arrangement of the tool engagement part 2d to those other than the example shown in the figures.

The displaying member 3 is confirmation means for displaying the tightening state of the tightening member 2 with respect to the nipple 1 for an operator or the like and enabling the operator or the like to easily confirm the tightening state by visual observation, manipulation, or the like. In the attachment state of the displaying member 3, the displaying member 3 is arranged to be sandwiched in the axial direction with respect to the space formed between the protruding part 1c of the nipple 1 and the tip part 2c of the tightening member 2.

As shown in Figs. 1 to 6, the displaying member 3 is preferably entirely formed into a ring shape in line with the entire outer peripheral surface of the tightening member 2 by an elastically-deformable member such as a soft synthetic resin.

In addition, the displaying member 3 has the deformation parts 3D that elastically deform in the axial direction, the radial direction, or the like as the movement means 2a of the tightening member 2 (relatively) moves to approach the guide part 1b of the nipple 1.

The deformation parts 3D are configured to gradually increase their deformation amounts in the axial direction, the radial direction, or the like as the tip part 2c of the tightening member 2 is caused to move to approach the protruding part 1c of the nipple 1.

In addition, the displaying member 3 preferably has a tentative fixing part 3H that is detachable with respect to any one of the protruding part 1c of the nipple 1 and the tip part 2c of the tightening member 2 and used to attach (retain) the displaying member 3 to be undroppable.

In a case shown in Figs. 1 to 3 as an example of the displaying member 3, a first displaying member 31 that elastically deforms the deformation parts 3D constituting its part in the axial direction to compress and deform the entire shape of the displaying member 3 in the axial direction is used as the tip part 2c of the tightening member 2 moves to approach the protruding part 1c of the nipple 1.

The first displaying member 31 has an outer section 31a formed to have a large diameter, an inner section 31b formed to have a diameter smaller than that of the outer section 31a, and connection sections 31c formed to be elastically deformable over the outer section 31a and the inner section 31b.

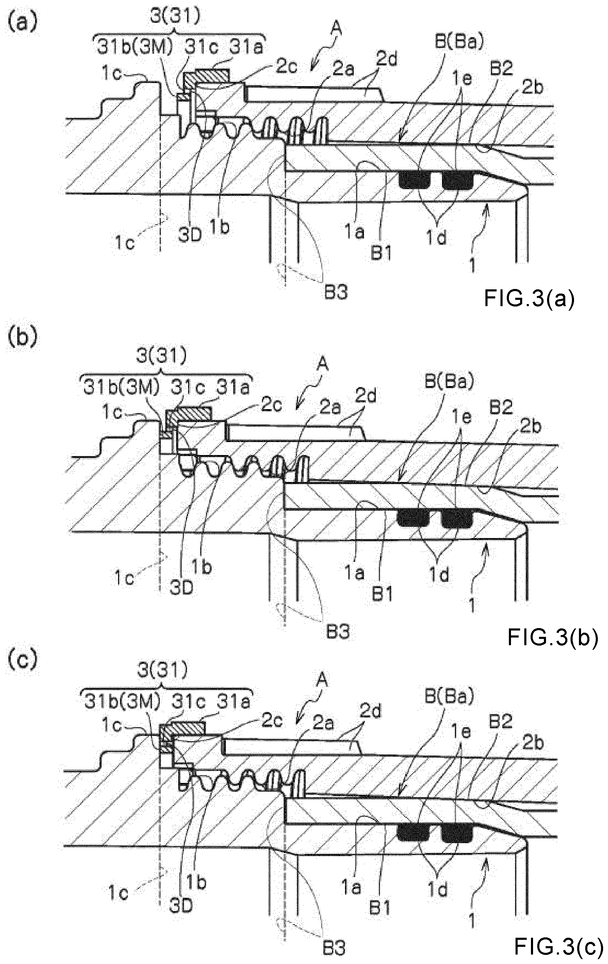

The strength of the connection sections 31c is configured such that the connection sections 31c are pressed to deform by a reaction force generated when the inner section 31b abuts against the protruding part 1c as shown in (b) in Fig. 3 as the tip part 2c of the tightening member 2 moves to approach the protruding part 1c of the nipple 1.

That is, in the first displaying member 31, the connection sections 31c correspond to the deformation parts 3D. The strength of the connection sections 31c is set such that the outer section 31a and the inner section 31b overlap each other in the radial direction when the first displaying member 31 is compressed into a prescribed size.

Therefore, as shown in Figs. 1 to 3, the first displaying member 31 is configured such that the outer section 31a and the inner section 31b are crushed to overlap each other in the radial direction by the deformation of the deformation parts 3D (the connection sections 31c) in the tightening state (tightening complete state) of the hose B in which the tip part 2c of the tightening member 2 is caused to make the closest approach to the protruding part 1c of the nipple 1.

In the case of an example shown in the figures as the first displaying member 31, the ring-shaped outer section 31a and the ring-shaped inner section 31b are arranged one by one in the axial direction, and each of a plurality of the connection sections 31c is integrally formed at a prescribed interval in the circumferential direction between the outer section 31a and the inner section 31b.

The inner section 31b has a marking part 3M of color different from the surface color of the outer section 31a on at least its surface.

In the outer section 31a, a cylindrical section 31H elastically deformable in the radial direction is separated at a plurality of spots in the circumferential direction to be formed as the tentative fixing part 3H detachably attached to the tip part 2c of the tightening member 2.

In the tightening complete state of the hose B shown in Figs. 1 to 3, the connection sections 31c serving as the deformation parts 3D are broken to separate the outer section 31a and the inner section 31b from each other. Thus, the marking part 3M on the surface of the inner section 31b is hidden on the inner side of the outer section 31a to be made visually unobservable from an outside.

Note that although not shown in the figures as modified examples other than the example shown in the figures, it is also possible to make changes such as arranging the inner sections 31b between a plurality of the outer sections 31a arranged side by side in the axial direction and forming the connection sections 31c between the outer sections 31a and the inner sections 31b and forming the entire shape of the first displaying member 31 into an arc shape such as a substantially C-shape along a part of the outer peripheral surface of the tightening member 2 instead of a ring shape. In addition, it is also possible to make changes such as changing the shape or the like of the cylindrical section 31H serving as the tentative fixing part 3H and maintaining the connection sections 31c in an elastically-deforming state without being broken in the tightening complete state of the hose B.

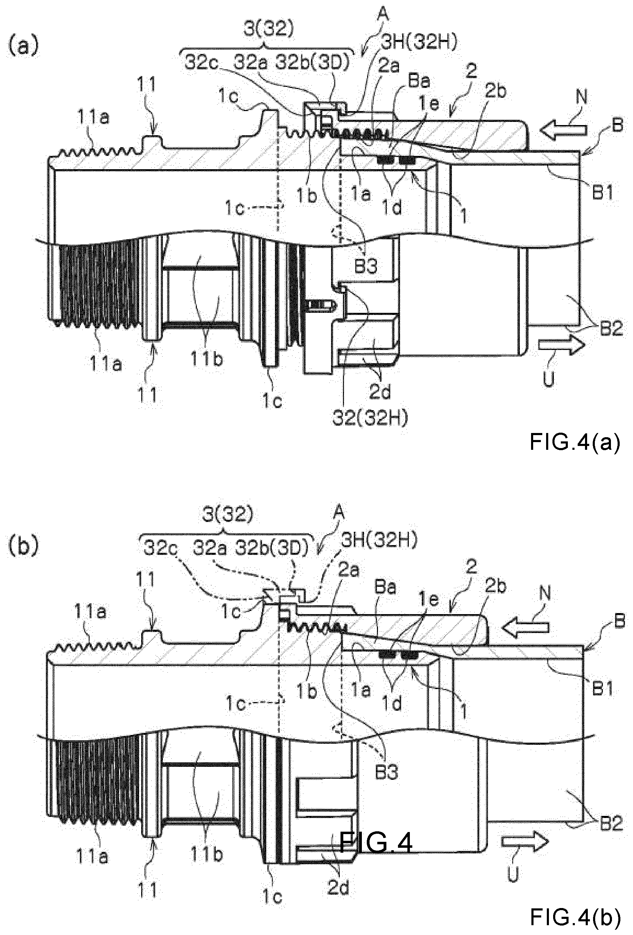

Further, in a case shown in Figs. 4 to 6 as another example of the displaying member 3, a second displaying member 32 that elastically deforms the deformation parts 3D constituting its part in the radial direction and the circumferential direction to expand its diameter to enlarge the entire size of the displaying member 3 is used as the tip part 2c of the tightening member 2 moves to approach the protruding part 1c of the nipple 1.

The second displaying member 32 has a wide section 32a formed into a band shape in the circumferential direction, narrow sections (bridges) 32b formed to have a width smaller than that of the wide section 32a, and a guide part 32c formed at the end surface of the wide section 32a that faces the protruding part 1c of the nipple 1 in the axial direction.

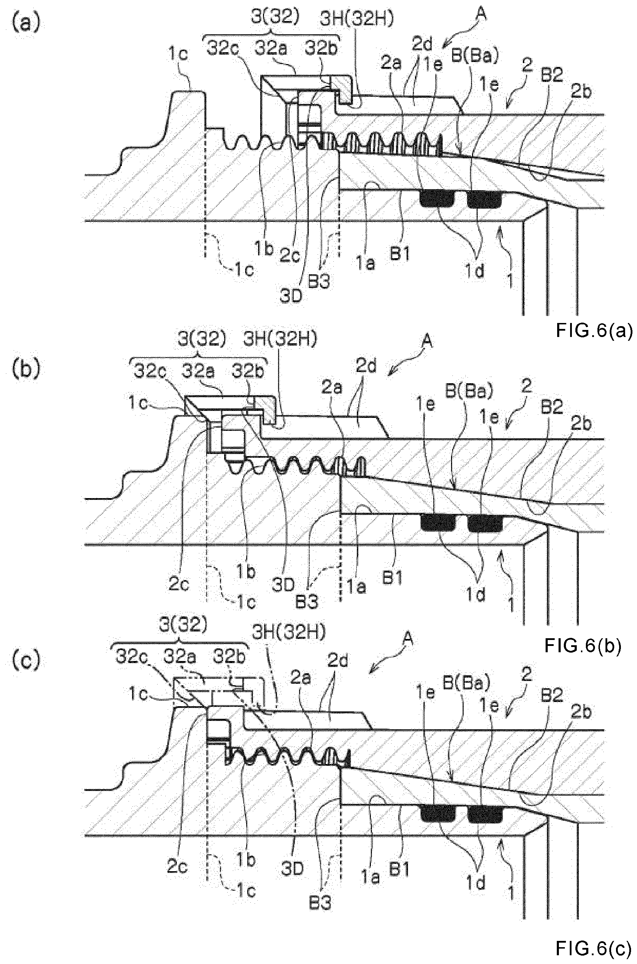

The guide part 32c is inclined to gradually protrude in the hose insertion direction N toward an outside in the radial direction. The inclination angle of the guide part 32c is set at an angle at which a force for deforming the wide section 32a to expand the diameter is generated when the guide part 32c abuts against the protruding part 1c as shown in (b) in Fig. 6 as the tip part 2c of the tightening member 2 moves to approach the protruding part 1c of the nipple 1.

That is, in the second displaying member 32, the narrow sections 32b correspond to the deformation parts 3D.

The second displaying member 32 expands and deforms (stretches and deforms) into a prescribed diameter expansion size, but the strength of the narrow sections 32b is set such that the narrow sections 32b are cracked when the second displaying member 32 further expands and deforms beyond the prescribed diameter expansion size.

Therefore, the second displaying member 32 is configured such that in the tightening state (tightening complete state) of the hose B in which the tip part 2c of the tightening member 2 is caused to make the closest approach to the protruding part 1c of the nipple 1 as shown in (b) in Fig. 4 and (c) in Fig. 6, the narrow sections 32b expand and deform in the radial direction and the circumferential direction beyond their strength and cracked or broken depending on to what extent the cracks of the narrow sections 32b widen.

In the case of an example shown in the figures as the second displaying member 32, each of a plurality of the narrow sections 32b is integrally formed at a prescribed interval in the circumferential direction on only one side of the ring-shaped wide section 32a.

In the wide section 32a, each of a plurality of claw-shaped hooks 32H is formed at a prescribed interval in the circumferential direction as the tentative fixing part 3H detachably attached to the tip part 2c of the tightening member 2.

In the tightening complete state of the hose B shown in (b) in Fig. 4 and (c) in Fig. 6, the narrow sections 32b are broken as cracks occurring in the narrow sections 32b widen, and the second displaying member 32 is released from between the protruding part 1c of the nipple 1 and the tip part 2c of the tightening member 2.

Note that although not shown in the figures as modified examples other than the example shown in the figures, it is also possible to make changes such as forming the entire shape of the second displaying member 32 into an arc shape such as a substantially C-shape along a part of the outer peripheral surface of the tightening member 2 instead of a ring shape and changing the shape, the number, or the like of the hooks 32H serving as the tentative fixing part 3H. In addition, it is also possible to make changes such as maintaining the narrow sections 32b in an elastically-deforming state without breaking cracks occurring in the narrow sections 32b in the tightening complete state of the hose B.

In the hose joint A according to the embodiments of the present invention described above, the tightening of the hose B is started when an operator sandwiches the displaying member 3 between the nipple 1 and the tightening member 2 and causes the tightening member 2 to move to approach the nipple 1 with the nipple 1 inserted into the hose B. [see (a) in Fig. 1, (a) in Fig. 3, (a) in Fig. 4, and (a) in Fig. 6]

The displaying member 3 is sandwiched between the nipple 1 and the tightening member 2 as the tightening member 2 moves to approach the nipple 1. When the tightening member 2 further moves to approach afterwards, the deformation parts 3D of the displaying member 3 start deformation in the axial direction, the radial direction, or the like. [see (b) in Fig. 3 and (b) in Fig. 6]

After that, in the tightening state (tightening complete state) of the hose B in which the pressing part 2b is pressed against the outer surface B2 of the hose B, the displaying member 3 reaches its breaking point as a result of the deformation of the deformation parts 3D. [see (b) in Fig. 1, (c) in Fig. 3, (b) in Fig. 4, and (c) in Fig. 6]

Such a deformation situation serves as a barometer indicating the tightening state (the tightening complete state) in which the pressing part 2b is pressed against the outer surface B2 of the hose B as the operator causes the tightening member 2 to move to approach the nipple 1. As a result, the operator or the like can easily confirm the tightening state by visual observation, manipulation, or the like and easily determine the connected state of the hose B.

Further, in the unconnected state of the hose B in which the operator suspends the movement of the tightening member 2 to approach the nipple 1, the deformation parts 3D of the displaying member 3 incompletely deform, and the operator or the like can easily confirm the unconnected state by visual observation, manipulation, or the like. [see (b) in Fig. 3 and (b) in Fig. 6]

In this case, the insufficient movement of the tightening member 2 can be confirmed by the operator.

Accordingly, even a person having no experience or knowledge as an operator, a supervisor, or the like can easily confirm the tightening state of the hose B by visual observation, manipulation, or the like immediately after the connection operation of the hose B or after the lapse of time since the connection completion of the hose B.

As a result, compared with a conventional hose joint in which two display rings are required to be provided at a connection body and a union nut, respectively, an operator, a supervisor, or the like can confirm the tightening state of the hose body B by visual observation or the like with a simple structure and at a low cost during or after the connection operation of the hose B only by adding components without replacing existing components. Therefore, an operator, a supervisor, an on-site management representative, or the like can safely perform the piping operation of the hose B.

Particularly, in the tightening in which the tightening member 2 moves to approach the nipple 1, the displaying member 3 (the first displaying member 31) preferably has the deformation parts 3D (the connection sections 31c) that overlap each other in the radial direction when the displaying member 3 is compressed to deform in the axial direction.

In this case, in the tightening state (the tightening complete state) of the hose B in which the pressing part 2b is (most tightly) pressed against the outer surface B2 of the hose B as the tightening member 21 moves to approach the nipple 1, the displaying member 3 (the first displaying member 31) is compressed to deform in the axial direction and crushed to make the sections overlap each other in the radial direction by the deformation of the deformation parts 3D (the connection sections 31c). [see (b) in Fig. 1 and (c) in Fig. 3]

Accordingly, any person can easily determine the completion of the tightening operation of the hose B by a confirmation operation such as the visual observation and manipulation of the deforming situation (crushed situation) of the displaying member 3 (the first displaying member 31).

As a result, even in a case in which a person cannot get into a location such as a ceiling, an underfloor, or the like where the hose B is connected, the person can easily and exactly confirm the optimum tightening state of the hose B and perform an appropriate maintenance operation.

In addition, the displaying member 3 (the first displaying member 31) preferably has the marking part 3M that is hidden on the inner side when the displaying member 3 (the first displaying member 31) overlaps with the marking part 3M in the radial direction.

In this case, in the tightening complete state of the hose B, the marking part 3M is hidden on the inner side when the sections of the displaying member 3 (the first displaying member 31) overlap each other in the radial direction and is made visually unobservable from the outside. [see (b) in Fig. 1 and (c) in Fig. 3]

Accordingly, the tightening state of the hose B can be quickly and easily determined through a visual confirmation operation based on the presence or absence of the marking part 3M at the displaying member 3 (the first displaying member 31).

As a result, the visual confirmation operation can be simplified to prevent a false determination.

Further, in the tightening state in which the tightening member 2 moves to approach the nipple 1, the displaying member 3 (the second displaying member 32) preferably has the deformation parts 3D (the narrow sections 32b) that deform to expand the diameter in the radial direction and the circumferential direction beyond their strength.

In this case, in the tightening state (the tightening complete state) of the hose B in which the pressing part 2b is (most tightly) pressed against the outer surface B2 of the hose B as the tightening member 2 moves to approach the nipple 1, the deformation parts 3D (the narrow sections 32b) expand and deform in the radial direction and the circumferential direction beyond their strength to cause cracks in the narrow sections 32b. [see (b) in Fig. 4 and (b) in Fig. 6]

Accordingly, the tightening state of the hose B can be quickly and easily determined through a confirmation operation such as visual observation and manipulation based on the presence or absence of cracks occurring in the displaying member 3 (the second displaying member 32).

As a result, even in a case in which a person cannot get into a location such as a ceiling, an underfloor, or the like where the hose B is connected, the person can easily and exactly confirm the optimum tightening state of the hose B and perform an appropriate maintenance operation.

In addition, the displaying member 3 (the second displaying member 32) preferably has the deformation parts 3D (the narrow sections 32b) that are broken when the deformation parts 3D deform to expand the diameter in the radial direction and the circumferential direction.

In this case, in the tightening complete state of the hose B, the deformation parts 3D (the narrow sections 32b) are broken, and the displaying member 3 (the second displaying member 32) is released from between the nipple 1 and the tightening member 2. [see (b) in Fig. 4 and (c) in Fig. 6]

Accordingly, the tightening state of the hose B can be quickly and easily determined through a confirmation operation such as visual observation and manipulation based on breakage or release occurring in the displaying member 3 (the second displaying member 32).

As a result, a confirmation operation based on visual observation or manipulation can be simplified to prevent a false determination.

Note that although the displaying member 3 is attached to the tip part 2c of the tightening member 2 by the tentative fixing part 3H to be detachable and undroppable in the examples shown in the figures in the first and second embodiments described above, the displaying member 3 may be attached to the protruding part 1c of the nipple 1 by the tentative fixing part 3H to be detachable and undroppable.

### [Reference Signs List]

- A: Hose joint
- 1: Nipple
- 1a: Insertion part
- 1c: Protruding part
- 2: Tightening Member
- 2a: Movement Means
- 2b: Pressing Part
- 2c: Tip Part
- 3: Displaying Member
- 3D: Deformation Part
- 3M: Marking Part
- 31: First Displaying Member
- 31C: Connection Section
- 32: Second Displaying Member
- 32b: Narrow Section
- B: Hose
- B1: Inner surface
- B2: Outer surface

## Claims

1. A hose joint (A) comprising:
a nipple having an insertion part (1a) that is inserted into a hose and faces an inner surface of the hose in a radial direction;
a tightening member that is provided to be movable in an axial direction with respect to an outer surface of the hose into which the insertion part of the nipple is inserted; and
a displaying member that is provided to be sandwiched in the axial direction between the nipple and the tightening member, wherein
the tightening member has a pressing part that is formed to press the outer surface of the hose against the insertion part in the radial direction as the tightening member moves to approach the nipple, and
the displaying member has a deformation part that deforms in the axial direction or the radial direction as the tightening member moves to approach the nipple.

2. The hose joint according to claim 1, wherein,
in a tightening state in which the tightening member moves to approach the nipple, the displaying member has deformation parts that overlap each other in the radial direction when the displaying member is compressed to deform in the axial direction.

3. The hose joint according to claim 2, wherein
the displaying member has a marking part that is hidden on an inner side when the displaying member overlaps with the marking part 3M in the radial direction.

4. The hose joint according to claim 1, wherein,
in a tightening state in which the tightening member moves to approach the nipple, the displaying member has a deformation part that deforms to expand a diameter thereof in the radial direction and a circumferential direction beyond strength thereof.

5. The hose joint according to claim 4, wherein
the displaying member has a deformation part that is broken when the deformation part deforms to expand the diameter in the radial direction and the circumferential direction.
